# EUROPÄISCHE PATENTSCHRIFT

(11) **EP 2 875 438 B1**
(45) Veröffentlichungstag und Bekanntmachung des Hinweises auf die Patenterteilung: **01.03.2017**
(21) Anmeldenummer: 13739142.1
(22) Anmeldetag: 11.07.2013
(51) Int. Cl.: G06F 13/40, H04L 12/403

(54) **ANMELDEVERFAHREN UND BUSKOMMUNIKATIONSEINRICHTUNG**
REGISTRATION METHOD AND BUS COMMUNICATION DEVICE
PROCÉDÉ D'ENREGISTREMENT ET DISPOSITIF DE COMMUNICATION PAR BUS

(30) Priorität: 23.07.2012 DE 102012014485
(43) Veröffentlichungstag der Anmeldung: 27.05.2015
(73) Patentinhaber: Sew-Eurodrive GmbH & Co. KG, 76646 Bruchsal (DE)
(72) Erfinder: HUA, Zhidong, 76137 Karlsruhe (DE); SCHÄFER, Hennig, 76698 Ubstadt-Weiher (DE); STOCKENBERGER, Ulrich, 76694 Forst (DE); SCHÄFER, Thomas, 76689 Neuthard (DE)
(86) Internationale Anmeldenummer: PCT/EP2013/002055
(87) Internationale Veröffentlichungsnummer: WO 2014/015952

(56) Entgegenhaltungen:
- WO-A1-03/096036
- US-A- 6 009 479
- US-A1- 2011 142 066

## Beschreibung

Die Erfindung betrifft ein Anmeldeverfahren und eine Buskommunikationseinrichtung.

Bussysteme, also Buskommunikationsanordnungen, mit einem Master und mehreren Slaves sind in einer Vielzahl von unterschiedlichen Ausgestaltungen bekannt. Bei diesen Bussystemen steuert ein Master die Buskommunikation und ruft die einzelnen Slaves mit Master-Aufrufen auf. Die jeweils angesprochenen Slaves antworten mit einer jeweiligen Slave-Antwort, welche u.a. die zu übermittelnden Nutzdaten enthält. Um eine Übersicht über die ansprechbaren Slaves zur Verfügung zu haben, hält der Master eine Liste von den zur Buskommunikation bereits angemeldeten Slaves vor, in welcher alle Slaves eingetragen sind, welche zur Buskommunikation ansprechbar sind.

Soll ein neuer Slave in das Bussystem eingebunden werden, so ergibt sich die Notwendigkeit, diesem Slave eine neue Adresse zu vergeben. Hier können Zuweisungsfehler auftreten, wenn mehr als ein Slave gleichzeitig in das Bussystem eingebunden werden soll. Daher sehen viele Bussysteme, beispielsweise das AS-Interface-Bussystem vor, dass bei einer automatischen Adressierung immer nur genau ein Slave als noch nicht angemeldeter Slave auftreten soll. Auf diese Weise werden Mehrdeutigkeiten oder fehlerhafte Zuweisungen vermieden.

Bussysteme werden auch bei der Kommunikation in industriellen Anlagen verwendet, bei welchen die Slaves beispielsweise auf mobilen Einheiten angeordnet sind, während der Master an einer stationären Einheit angeordnet ist. Bei derartigen Anlagen kann vorgesehen sein, dass mehrere Master jeweils unterschiedliche Einflussbereiche kontrollieren. In diesem Fall kann es auftreten, dass ein Slave von einem Bereich in einen anderen Bereich wechselt und zur Kommunikation übergeben werden muss. Da die Slaves mobil sind, kann es auftreten, dass mehrere Slaves gleichzeitig oder in überschneidenden Zeitabschnitten übergeben werden sollen.

Aus US 6,009,479 A sind ein System und ein Verfahren zur Zuweisung eindeutiger Adressen an Teilnehmer eines Systemverwaltungsbusses bekannt, bei welchen ein Busmaster regelmäßig ermittelt, ob irgendein Slave auf einer Klassenadresse liegt, und - falls dies gegeben ist - die Slaves auffordert, innerhalb eines zusammenhängenden Zeitabschnitts eine Hardwareidentifikationsnummer zu senden,wobei diejenigen Slaves, die beim Senden der Hardwareidentifikationsnummer einen Übertragungsfehler feststellen, das Senden einstellen und derjenige Slave, der seine Hardwareidentifikationsnummer erfolgreich gesendet hat, eine vom Busmaster vergebene Adresse annimmt.

Die Erfindung beschäftigt sich mit der Aufgabe, ein Anmeldeverfahren für einen noch nicht angemeldeten Slave in einem Bussystem zu schaffen, bei welchem eine Beeinträchtigung des Datenverkehrs zwischen bereits angemeldeten Slaves vermindert ist.

Diese Aufgabe wird erfindungsgemäß bei einem Anmeldeverfahren durch die Merkmale des Anspruches 1 und bei einer Buskommunikationseinrichtung durch die Merkmale des Anspruches 15 gelöst.

Wichtige Merkmale der Erfindung eines Anmeldeverfahrens für einen noch nicht angemeldeten Slave in einem einen Master umfassenden Bussystem sind in Anspruch 1 angegeben. Insbesondere wird somit erfindungsgemäß vorgeschlagen, dass in dem Master eine Liste von zur Buskommunikation bereits angemeldeten Slaves vorgehalten wird, der Master an die bereits angemeldeten Slaves über einen Bus des Bussystems Master-Aufrufe versendet und jeder bereits angemeldete Slave auf einen an ihn gerichteten Master-Aufruf über den Bus einer Slave-Antwort sendet, dass in der zeitlichen Abfolge der Master-Aufrufe und der Slave-Antworten vom Master und den angemeldeten Slaves Zeitfenster freigehalten werden, dass der noch nicht angemeldete Slave über den Bus in den Zeitfenstern jeweils ein Arbitrierungselement einer Arbitrierungssequenz sendet und dass der Master den noch nicht angemeldeten Slave in die Liste als angemeldeten Slave einträgt, wenn der noch nicht angemeldete Slave seine Arbitrierungssequenz erfolgreich vollständig gesendet hat. Von Vorteil ist dabei, dass eine Möglichkeit geschaffen ist, zwischen zwei oder mehr noch nicht angemeldeten Slaves zu arbitrieren, um Kollisionen aufzulösen. Von Vorteil ist dabei weiter, dass ein Anmeldeverfahren geschaffen ist, welches während der normalen Buskommunikation ablaufen kann. Hierzu wird die Arbitrierungssequenz auf zwei oder mehr Arbitrierungselemente aufgeteilt. Diese Arbitrierungselemente können somit einzeln in den zeitlich zueinander beabstandeten Zeitfenstern gesendet werden.

Bevorzugt besteht die Arbitrierungssequenz aus zwei oder mehr Arbitrierungselementen, die identisch zueinander oder verschieden voneinander ausgebildet sein können.

Durch die zeitliche Verschränkung von Zeitabschnitten, in denen über den Bus die Master-Aufrufe und Slave-Antworten gesendet werden, mit Zeitabschnitten, in denen Arbitrierungselemente gesendet werden, kann eine Verarbeitungszeit, die zur Verarbeitung von in den einzelnen Zeitabschnitten jeweils gesendeten Daten im jeweiligen Empfänger ohnehin erforderlich ist, für die Arbitrierung genutzt werden.

Das Freihalten der Zeitfenster kann im einfachsten Fall dadurch erreicht werden, dass der Master und die bereits angemeldeten Slaves in den Zeitfenstern Sendepausen einlegen oder einhalten.

Bei einer vorteilhaften Ausgestaltung kann vorgesehen sein, dass die Zeitfenster zwischen jedem Master-Aufruf und der jeweils nachfolgenden Slave-Antwort freigehalten werden. Von Vorteil ist dabei, dass die systemnotwendigen Unterbrechungen zur Verarbeitung eines Master-Aufrufs auf der Empfängerseite und/oder einer Slave-Antwort auf der Masterseite nutzbar sind, um Zeitfenster für das Senden von Arbitrierungselementen zu schaffen. Hierdurch ist eine möglichst verzögerungsarme Einbindung des Anmeldeverfahrens in die routinemäßige oder normale Buskommunikation möglich.

Bei einer vorteilhaften Ausgestaltung kann vorgesehen sein, dass der Master für jedes Zeitfenster ein in dem Zeitfenster an dem Bus anliegendes Signals wiederholt. Hierzu kann in dem Zeitfenster ein besonderer Zeitabschnitt definiert sein oder die Wiederholung kann mit einem nachfolgenden Master-Aufruf erfolgen. Von Vorteil ist dabei, dass den sendenden Slaves ein Vergleich des selbst gesendeten Arbitrierungselements mit dem tatsächlich anliegenden Signal ermöglicht ist. Somit lassen sich beispielsweise Buskollisionen leicht erkennen.

Bei einer vorteilhaften Ausgestaltung kann vorgesehen sein, dass der noch nicht angemeldete Slave das Senden der Arbitrierungssequenz beendet, wenn in einem Zeitfenster, in welchem dieser noch nicht angemeldete Slave ein Arbitrierungselement sendet, ein weiterer noch nicht angemeldeter Slave ein höherwertigeres Arbitrierungselement sendet oder gesendet hat. Von Vorteil ist dabei, dass ein automatisch ausführbares Verfahren zur Auflösung von Buskollisionen geschaffen ist.

Insgesamt kann bei der Erfindung gesagt werden, dass eine erfolgreiche, vollständige Sendung einer Arbitrierungssequenz dann vorliegt, wenn ein zugehöriges Arbitrierungsverfahren von dem sendenden Slave gewonnen wurde.

Die Arbitrierungselemente können jeweils binär oder mehrkomponentig sein.

Bei einer vorteilhaften Ausgestaltung kann vorgesehen sein, dass der noch nicht angemeldete Slave für jedes Zeitfenster, in welchem dieser noch nicht angemeldete Slave ein Arbitrierungselement sendet, ein in dem Zeitfenster an dem Bus anliegendes Signal mit diesem Arbitrierungselement vergleicht. Von Vorteil ist dabei, dass auf einfache Weise automatisiert erkennbar ist, ob ein weiterer, noch nicht angemeldeter Slave ein höherwertigeres Arbitrierungselement gesendet hat.

Bei einer vorteilhaften Ausgestaltung kann vorgesehen sein, dass der noch nicht angemeldete Slave das Senden der Arbitrierungssequenz beendet, wenn in einem Zeitfenster, in welchem dieser noch nicht angemeldete Slave ein Arbitrierungselement sendet, an dem Bus ein Signal anliegt, welches höherwertiger als das eigene gesendete Arbitrierungselement ist. Hierbei kann sich der Begriff der Höherwertigkeit auf eine festgelegte Prioritätsreihenfolge beziehen: Arbitrierungselemente mit höherer Priorität sind dann höherwertig gegenüber solchen mit niedrigerer Priorität. Von Vorteil ist dabei, dass der noch nicht angemeldete Slave auf einfache Weise erkennen kann, wenn ein weiterer Slave mit höherer Priorität sich ebenfalls an dem Bussystem anmelden will.

Bei einer vorteilhaften Ausgestaltung kann vorgesehen sein, dass der Master dem noch nicht angemeldeten Slave, der seine Arbitrierungssequenz erfolgreich vollständig gesendet hat, über den Bus eine Adresse zuteilt. Von Vorteil ist dabei, dass ein neu angemeldeter Slave automatisch in die Buskommunikation einbindbar ist, indem ihm eine Adresse zugeteilt wird. Von Vorteil ist weiter, dass der neu angemeldete Slave somit für die normale routinemäßige Buskommunikation ansprechbar ist.

Bei einer vorteilhaften Ausgestaltung kann vorgesehen sein, dass der noch nicht angemeldete Slave, der seine Arbitrierungssequenz erfolgreich vollständig gesendet hat und/oder dem vom Master eine Adresse zugeteilt wurde, über den Bus eine Bestätigungsnachricht sendet. Von Vorteil ist dabei, dass dem Master der erfolgreiche Abschluss einer Arbitrierung und/oder einer Adressenvergabe signalisierbar ist. Somit ist es möglich, dass der Master, wenn die Bestätigungsnachricht ausbleibt, selbsttätig ein Fehlererkennungs- und/oder Fehlerbehebungsverfahren einleiten kann. Von Vorteil ist weiter, dass anderen, noch nicht angemeldeten Slaves der Abschluss des Anmeldeverfahrens signalisierbar ist. Somit können die anderen, noch nicht angemeldeten Slaves im Anschluss ein eigenständiges Anmeldeverfahren starten.

Bei einer vorteilhaften Ausgestaltung kann vorgesehen sein, dass der Master den noch nicht angemeldeten Slave erst in die Liste aufnimmt, wenn er die oder eine Bestätigungsnachricht des noch nicht angemeldeten Slaves empfangen hat. Von Vorteil ist dabei, dass Fehleintragungen vermeidbar sind und dass eine Kommunikationsüberwachung und eine Überwachung auf einen erfolgreichen Abschluss des Anmeldeverfahrens durch den Master ermöglicht ist.

Bei einer vorteilhaften Ausgestaltung kann vorgesehen sein, dass den Arbitrierungselementen in der Arbitrierungssequenz jeweils Positionsangaben zugeordnet sind, durch welche die zeitliche Reihenfolge der Arbitrierungselemente in der Arbitrierungssequenz beschrieben wird.

Von Vorteil ist dabei, dass Auslassungen oder Überspringungen von Arbitrierungselementen beim Senden der Arbitrierungssequenz detektierbar sind. Somit ist ein definierter Ablauf des zugehörigen Arbitrierungsverfahrens sicherstellbar.

Bei einer vorteilhaften Ausgestaltung kann vorgesehen sein, dass dem Zeitfenstern zumindest während der Zeitdauer für das Senden einer vollständigen Arbitrierungssequenz jeweils eine Soll-Positionsangabe zugeordnet ist. Von Vorteil ist dabei, dass erkennbar ist, wenn einzelne Slaves im Arbitrierungsverfahren aus dem Takt geraten oder Teile der Arbitrierungssequenz nicht vollständig übermittelt werden.

Bei einer vorteilhaften Ausgestaltung kann vorgesehen sein, dass der noch nicht angemeldete Slave das Senden der Arbitrierungssequenz beendet, wenn die Soll-Positionsangabe des aktuellen Zeitfensters von der Ist-Positionsangabe des von diesem noch nicht angemeldeten Slave aktuell gesendeten oder zu sendenden Arbitrierungselement abweicht. Von Vorteil ist dabei, dass die Slaves selbsttätig eine Fehlerkorrektur oder Fehlererkennung ausführen können, um Übertragungsfehler beim Absetzen der Arbitrierungssequenz zu erkennen.

Bei einer vorteilhaften Ausgestaltung kann vorgesehen sein, dass die Soll-Positionsangabe für jedes Zeitfenster vor und/oder nach dem Zeitfenster vom Master über den Bus gesendet wird. Von Vorteil ist dabei, dass die Soll-Positionsangabe auf einfache Weise für alle Slaves zum Vergleich mit der Ist-Positionsangabe bereitgestellt ist.

Bei einer vorteilhaften Ausgestaltung kann vorgesehen sein, dass ein angemeldeter Slave aus der Liste gelöscht wird, wenn er eine vorbestimmte Anzahl von Malen auf einen an ihn gerichteten Master-Aufruf keine oder eine fehlerhafte Slave-Antwort gesendet hat. Von Vorteil ist dabei, dass erkennbar ist, wenn Slaves das Bussystem verlassen, beispielsweise wie es in Anlagen mit mobilen Slaves und mehreren getrennten Kontrollbereichen mehrerer Master der Fall sein kann. Auf diese Weise kann ein Übergabeverfahren zwischen unterschiedlichen Mastern einfach realisiert werden, ohne dass die Master miteinander kommunizieren müssen.

Bei einer vorteilhaften Ausgestaltung kann vorgesehen sein, dass die angemeldeten Slaves zyklisch vom Master aufgerufen werden. Von Vorteil ist dabei, dass das Anmeldeverfahren bei zyklischen Bussystemen verwendbar ist. Von Vorteil ist weiter, dass durch die zyklische Abfrage ein fester Ablauf für die freigehaltenen Zeitfenster geschaffen ist, so dass das Arbitrierungsverfahren innerhalb einer bekannten Zeitspanne ausführbar ist.

Bei einer vorteilhaften Ausgestaltung kann vorgesehen sein, dass der Master und die angemeldeten und/oder noch nicht angemeldeten Slaves über den Bus FDM-(Frequenzmultiplexverfahren, Frequency Division Multiplexing) oder OFDM-(orthogonales Frequenzmultiplexverfahren, Orthogonal Frequency Division Multiplexing) kodierte Signale senden. Von Vorteil ist dabei, dass in einem Sendeschritt mehrere Bits gleichzeitig sendbar sind. Von Vorteil ist weiter, dass sinusförmige Signalamplituden einsetzbar sind, die besonders geeignet für induktive Kopplungen in der Signalübertragung sind.

Es kann hierbei vorgesehen sein, dass die gesamte Information der Arbitrierungssequenz bereits in einem mehrkomponentigen Arbitrierungselement vollständig enthalten sein kann. Die Arbitrierungssequenz kann beispielsweise dadurch gebildet werden, dass dieses Arbitrierungselement eine vorgegebene Anzahl von Malen wiederholt wird.

Werden FDM- oder OFDM-kodierte Signale verwendet, so kann vorgesehen sein, dass den einzelnen Frequenzen des FDM- oder OFDM-Verfahrens Zweierpotenzen zugeordnet sind, so dass eine Superposition von unterschiedlichen Frequenzanteilen einer binär dargestellten Zahl entspricht. Auch andere Darstellungen zu Zahlenbasen größer 2 sind mit mehrkomponentigen Arbitrierungselementen realisierbar.

Besonders günstig ist es, wenn die Slaves in Bezug auf den Master mobil beziehungsweise verfahrbar oder beweglich sind. Hierbei kann vorgesehen sein, dass die Slaves induktiv an den Bus angekoppelt sind.

Beispielsweise kann vorgesehen sein, dass über den Bus die Slaves zusätzlich mit elektrischer Leistung versorgt werden, beispielsweise durch induktive, resonante Kopplung. Für die resonante Kopplung können die Slaves empfängerseitig einen Schwingkreis aufweisen, welcher auf eine Resonanzfrequenz eingestellt ist, die durch einen vorzugsweise eingeprägten Wechselstrom konstanter Amplitude im Bus gegeben ist.

Durch die resonante Kopplung ist eine induktive Leistungsübertragung über vergleichsweise große Abstände, insbesondere im Vergleich zu den Spaltmaßen in der Transformatortechnik, ermöglicht.

Bei einer vorteilhaften Ausgestaltung kann vorgesehen sein, dass nach Abschluss eines oder des Master-Aufrufs und/oder vor dem Zeitfenster eine Funktionsprüfung von zur Buskommunikation genutzten Frequenzkanälen durchgeführt wird und/oder dass der Master und/oder wenigstens ein Slave einen zum Senden oder Empfangen verwendeten Verstärkungsfaktor anpasst und/oder auf einen anderen Frequenzkanal wechselt, wenn die oder eine Funktionsprüfung unzureichende Übertragungseigenschaften in dem Frequenzkanal ergab. Von Vorteil ist dabei, dass Störungen in der Übertragung, beispielsweise durch einen weiten Übertragungsweg oder durch äußere Störquellen, selbsttätig oder automatisch kompensierbar sind. Dies ist besonders günstig, wenn die Buskommunikation im FDM- oder OFDM-Verfahren oder einem anderen Mehrfrequenzkanal-Verfahren erfolgt.

Wichtige Merkmale der Erfindung einer Buskommunikationseinrichtung sind, dass ein Master und wenigstens ein Slave vorhanden sind und dass Mittel zur Ausführung eines Anmeldeverfahrens nach einem der vorangegangenen Ansprüche ausgebildet und eingerichtet sind. Besonders günstig ist es dabei, wenn die Mittel zur Ausführung des Anmeldeverfahrens masterseitige und/oder slaveseitige Datenverarbeitungsmittel aufweisen, welche durch Programmierung zur Ausführung des Anmeldeverfahrens eingerichtet sind. Die Mittel können auch ganz oder teilweise diskrete elektronische Schattungen aufweisen.

Bei einer vorteilhaften Ausgestaltung kann vorgesehen sein, dass der Master Speichermittel für die bereits beschriebene Liste von zur Buskommunikation bereits angemeldeten Slaves aufweist.

Bei einer vorteilhaften Ausgestaltung kann vorgesehen sein, dass die Slaves jeweils ein Speichermittel, insbesondere ein nicht-flüchtiges Speichermittel, aufweisen, welches zur Hinterlegung der jeweiligen Arbitrierungssequenz eingerichtet ist.

Bei einer vorteilhaften Ausgestaltung kann vorgesehen sein, dass die Slaves und/oder der Master ein Verstellmittel zur Anpassung eines Verstärkungsfaktors für die Sende- und/oder Empfangsvorgänge aufweisen. Von Vorteil ist dabei, dass Schwächungen in der Übertragung automatisch kompensierbar sind.

Bei einer vorteilhaften Ausgestaltung kann vorgesehen sein, dass die Slaves und/oder der Master zur Durchführung einer Funktionsprüfung von Übertragungseigenschaften von verwendeten Frequenzkanälen eingerichtet sind. Von Vorteil ist dabei, dass Übertragungsstörungen automatisch erkennbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von einem Ausführungsbeispiel näher beschrieben, ist aber nicht auf dieses Ausführungsbeispiel beschränkt. Weitere Ausführungsbeispiele ergeben sich durch Kombination einzelner oder mehrerer Schutzansprüche untereinander und/oder mit einzelnen oder mehreren Merkmalen des Ausführungsbeispiels.

Es zeigt
Fig. 1 eine Prinzipskizze einer industriellen Anlage mit einer erfindungsgemäßen Buskommunikationseinrichtung,
Fig. 2 eine stark vereinfachte Prinzipdarstellung einer Speicheraufteilung in einem Master der Buskommunikationseinrichtung nach Fig. 1,
Fig. 3 eine beispielhafte Befüllung eines Teils des Speichermittels aus Fig. 2,
Fig. 4 ein Beispiel für eine Zuordnung von Arbitrierungssequenzen zu Slaves bei einem erfindungsgemäßen Anmeldeverfahren,
Fig. 5 ein Ablaufdiagramm zur Erläuterung des erfindungsgemäßen Anmeldeverfahrens in stark vereinfachter Darstellung,
Fig. 6 ein Beispiel für den Ablauf einer Arbitrierung bei einem erfindungsgemäßen Anmeldeverfahren und
Fig. 7 eine aktualisierte Befüllung der Liste gemäß Fig. 3 nach Abschluss des erfindungsgemäßen Anmeldeverfahrens.

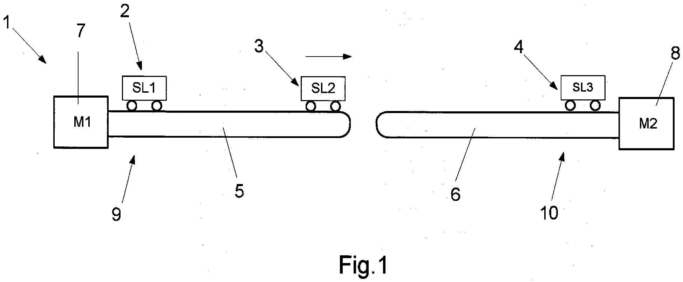

Fig. 1 zeigt eine im Ganzen mit 1 bezeichnete industrielle Anlage aus mehreren beweglichen oder mobilen Einheiten 2, 3, 4, die aus Primärleitern 5, 6 induktiv in resonanter Kopplung elektrisch leistungsversorgt sind.

Zwei stationäre Einheiten 7, 8 versorgen jeweils einen Primärleiter 5 beziehungsweise 6 in der dargestellten Zuordnung.

Die stationären Einheiten 7, 8 weisen jeweils einen Master M1 beziehungsweise M2 auf.

Die Primärleiter 5, 6 bilden jeweils einen Bus für eine Buskommunikation des jeweils angeschlossenen Masters M1, M2.

Die mobilen Einheiten 2, 3, 4 weisen jeweils einen Slave SL1, SL2 und SL3 auf.

Der Master M1, der Primärleiter 5 und die Slaves SL1 und SL2 bilden somit ein erstes Bussystem 9, welches nach einem Busprotokoll Daten austauscht.

Der Master M2, der Primärleiter 6 und der Slave SL3 bilden ein zweites Bussystem 10, bei welchem nach einem vorzugsweise zum ersten Bussystem 9 gleichartigen oder identischen Busprotokoll Daten ausgetauscht werden.

Die Erstreckungsgebiete der Primärleiter 5, 6 definieren jeweils einen Einflussbereich, in welchem eine Buskommunikation mit einem Master M1 oder M2 möglich ist.

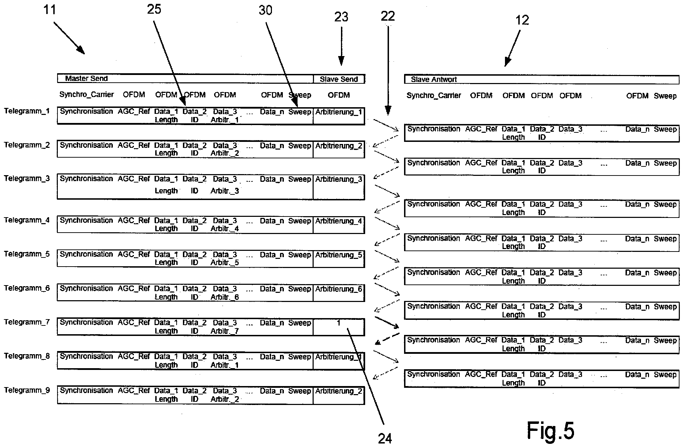

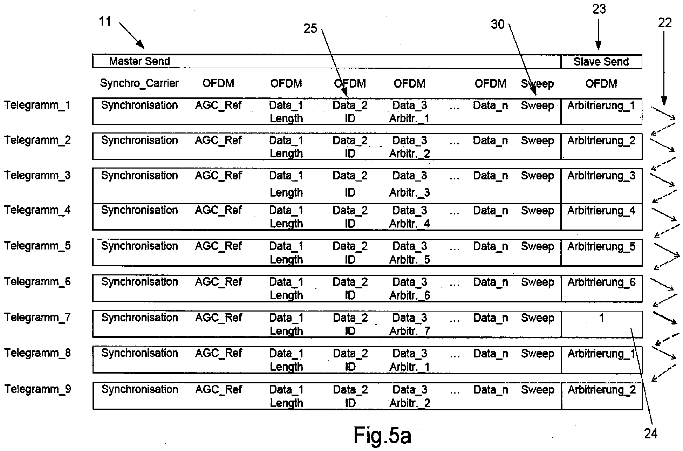

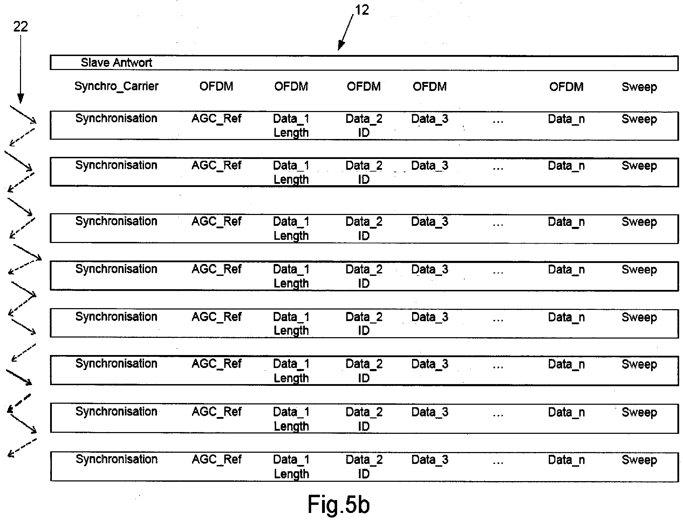

Bei der Buskommunikation versendet der Master M1 beziehungsweise M2 an jeden der jeweils im Bussystem 9, 10 angemeldeten Slaves SL1, SL2 beziehungsweise SL3 in zyklischer Wiederkehr Master-Aufrufe 11 (vgl. Fig. 5), worauf die jeweiligen Slaves SL1, SL2 und SL3 mit einer Slave-Antwort 12 antworten.

In Fig. 1 ist ersichtlich, dass sich die mobile Einheit 3 aus dem Einflussbereich des Primärleiters 5 hinausbewegt und in den Einflussbereich des Primärleiters 6 wechselt.

Somit ist eine Buskommunikation zwischen dem Master M1 und dem Slave SL3 nicht mehr möglich, sondern es muss eine Buskommunikation zwischen dem Master M2 und dem Slave SL3 aufgebaut werden.

Hierzu läuft das erfindungsgemäße Verfahren ab, welches im Folgenden näher beschrieben wird.

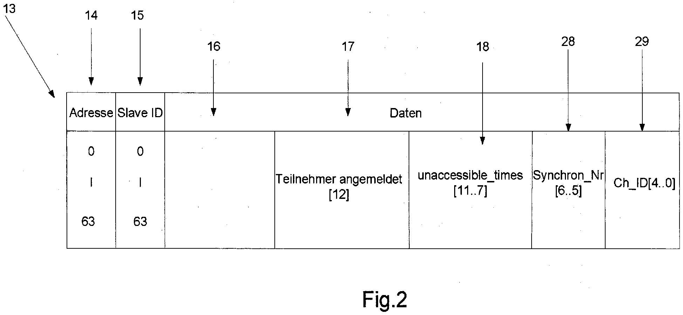

In jedem der Master M1, M2 ist jeweils ein nicht weiter dargestelltes Speichermittel vorhanden, welches eine Speicheraufteilung 13 nach dem Prinzip von Fig. 2 aufweist.

In einer ersten Spalte 14 der Speicheraufteilung 13 sind die Adressen des Speichermittels verzeichnet.

In der rechts folgenden Spalte 15 sind Identifikationssnummern der Slaves SL1, SL2 und SL3 und weiterer Slaves eintragbar beziehungsweise eingetragen. Die Zuordnung von Identifikationsnummern zu Adressen kann fest oder variabel eingerichtet sein.

Eine nach rechts folgende Spalte 16 ist für weitere Nutzdaten reserviert.

In der nächsten Spalte 17 ist eingetragen oder eintragbar, ob der betreffende Slave SL1, SL2, SL3 zur Buskommunikation bei dem Master M1 beziehungsweise M2 angemeldet ist. Hierbei kann eine logische "1" einen angemeldeten Slave und eine logische "0" einen noch nicht angemeldeten Slave bezeichnen. Es kann aber auch umgekehrt vereinbart sein.

Die Spalten 14 und/oder 15 können als nicht-flüchtige Einträge hinterlegt sein. Die Spalten 16, 17, 18, 19, 20 können als flüchtige Speicherbereiche und/oder überschreitbare Speicherbereiche ausgebildet sein.

Jedem Slave SL1, SL2, SL3 ist eine Zeile in der Speicheraufteilung 13 zugeordnet.

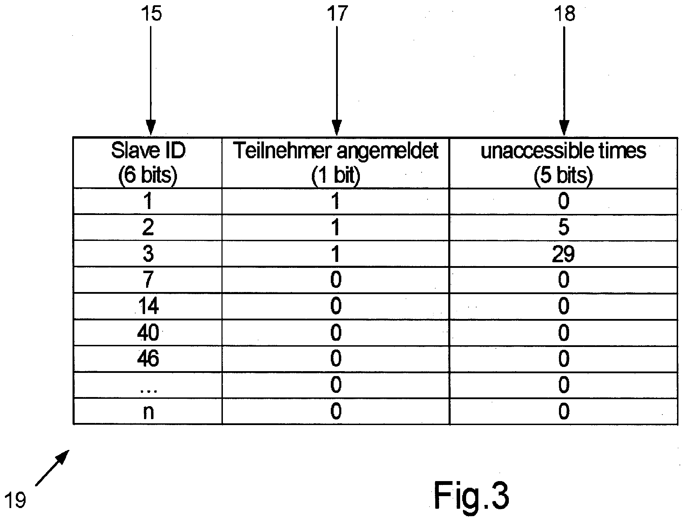

Fig. 3 zeigt beispielhaft eine Befüllung der Speicheraufteilung 13.

Es ist eine Liste 19 gebildet. In dem Beispiel gemäß Fig. 3 ist ersichtlich, dass die Slaves mit den Identifikationsnummern 1, 2, 3 zur Buskommunikation angemeldet sind, die übrigen aufgeführten Slaves jedoch nicht.

Es soll im Folgenden beschrieben werden, nach welchem Verfahren sich beispielsweise die Slaves mit den Identifikationsnummern 40, 14, 7 und 46 zur Buskommunikation anmelden. Diese Slaves werden im Folgenden als noch nicht angemeldete Slaves Neu1, Neu2, Neu3, Neu4 bezeichnet.

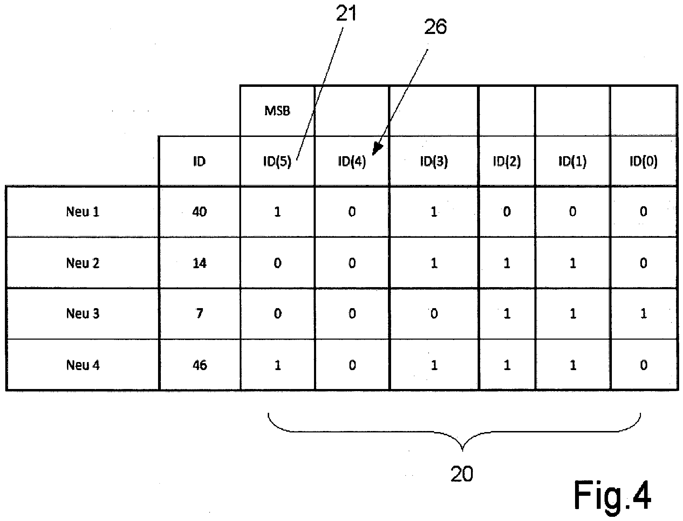

Fig. 4 zeigt zu jedem der genannten Slaves Neu1, Neu2, Neu3, Neu4 die zugehörige Arbitrierungssequenz 20, welche als binäre Datenfolge aus einzelnen Arbitrierungselementen 21 zusammengesetzt ist.

Im Ausführungsbeispiel zeigt Fig. 4, dass die Arbitrierungssequenzen 20 jeweils aus sechs binären Arbitrierungselementen 21 zusammengesetzt sind.

In Fig. 4 entspricht jede Zeile wieder einem Slave.

Fig. 5 zeigt durch Pfeile angedeutet die zeitliche Abfolge 22 des Austauschs von Master-Aufrufen 11 und Slave-Antworten 12. Figur 5a und Figur 5b zeigen jeweils einen vergrößerten Ausschnitt aus Figur 5.

Es ist ersichtlich, dass zwischen jedem Master-Aufruf 11 und der darauf folgenden Slave-Antwort 12 in der zeitlichen Abfolge 22 jeweils ein Zeitfenster 23 eingerichtet ist.

Die Zeitfenster 23 werden von dem Master M1, M2 und den bereits zur Buskommunikation in der Liste 19 angemeldeten Slaves SL1, SL3 freigehalten, indem in den Zeitfenstern 23 keine Daten abgesetzt werden.

Hierbei sendet der Master M1 (beziehungsweise im Bussystem 10 der Master M2) an alle Slaves in der Liste 19, bei denen in der Spalte 17 eine 1 eingetragen ist, in zyklischer Abfolge einen Master-Aufruf 11, auf den der jeweils angesprochene Slave mit einer Slave-Antwort 12 in an sich bekannter Weise antwortet.

Die noch nicht angemeldeten Slaves Neu1, Neu2, Neu3, Neu4, beispielsweise der Slave SL2 in Fig. 1 nach Verlassen des Primärleiters 5 und Eintritt in den Einflussbereich des Primärleiters 6, beginnend zur Anmeldung, in den Zeitfenstern ein Arbitrierungselement 21 ihrer individuellen Arbitrierungssequenz 20 zu senden.

Fig. 5 zeigt den Verlauf eines Arbitrierungsverfahrens für die Arbitrierungssequenzen 20 gemäß Fig. 4.

Die Arbitrierungssequenzen 20 jedes Slaves sind hierbei in einem Speichermittel des jeweiligen Slaves hinterlegt.

Zur Verdeutlichung des Prinzips der Erfindung sei angenommen, dass die noch nicht angemeldeten Slaves Neu1, Neu2, Neu3, Neu4 in der Tabelle gemäß Fig. 4 sich gleichzeitig bei dem Bussystem 10 und somit beim Master M2 anmelden wollen.

In der zeitlichen Abfolge 22 in Fig. 5 senden daher alle noch nicht angemeldeten Slaves Neu1, Neu2, Neu3, Neu4 jeweils ihr erstes Arbitrierungselement 21 in der jeweiligen individuellen Arbitrierungssequenz 20, also den jeweiligen Zeileneintrag in der Spalte ID (5) in Fig. 4.

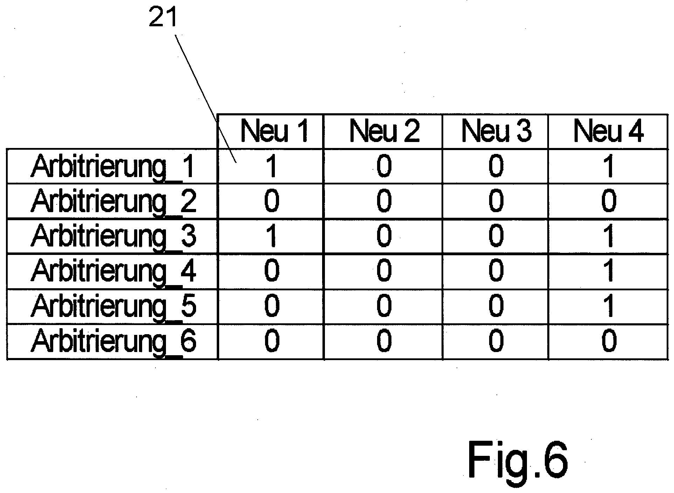

Es ergibt sich somit die Situation gemäß der Zeile "Arbitrierung_1" der Tabelle in Fig. 6, in welcher die Slaves Neu1, Neu2, Neu3 und Neu4 jeweils ihr Arbitrierungselement 21 in dem Zeitfenster 23 auf den Bus angelegt haben.

Anschließend erfolgt das Senden einer Slave-Antwort 12 durch einen bereits angemeldeten Slave gemäß der zeitlichen Abfolge 22.

In dem nächsten Master-Aufruf 11 in der zeitlichen Abfolge 22, also dem Master-Aufruf "Telegramm_2", wiederholt der Master M2 das Signal, welches in dem Zeitfenster 23 "Arbitrierung_1" auf dem Bus anlag.

In dem Beispiel der Fig. 6 sendet der Master somit eine logische "1" an vorbestimmter Stelle in den Nutzdaten.

Somit erkennen die Slaves Neu2 und Neu3, dass gleichzeitig mit ihnen weitere Slaves (im Ausführungsbeispiel Neu1 und Neu4) ein höherwertiges Arbitrierungselement 21 gesendet haben. Dies können die Slaves Neu2 und Neu3 daran erkennen, dass an dem Bus ein Signal, nämlich eine logische "1", anliegt, welches höherwertig als das eigene gesendete Arbitrierungselement 21, hier eine logische "0" ist.

Die Slaves Neu2 und Neu3 beenden daher das Senden von weiteren Arbitrierungselementen 21 der individuellen Arbitrierungssequenz 20.

Die Slaves Neu1 und Neu4 fahren dagegen mit dem Arbitrierungsverfahren fort und senden in dem Zeitfenster "Arbitrierung 2" das Arbitrierungselement 21 aus der Spalte ID (4) in Fig. 4.

Der Master wiederholt die insgesamt anliegende logische "0" im Master-Aufruf "Te)egramm_3". Keiner der Slaves Neu1 und Neu4 kann somit das Senden des jeweils anderen Slaves detektieren.

Daher fahren die Slaves Neu1 und Neu4 mit der Arbitration fort und senden in dem Zeitfenster "Arbitrierung_3" das jeweilige Arbitrierungselement 21 aus der Spalte ID (3).

Wieder können die Slaves Neu1 und Neu4 anhand des wiederholten, am Bus anliegenden Signals im Master-Aufruf "Teiegramm_4" nicht erkennen und setzen die Arbitrierung fort.

Nun senden die Slaves Neu1 und Neu4 ihr jeweiliges aktuelles Arbitrierungselement 21 aus der Spalte ID (2).

Aus dem Inhalt des Eintrags von "Data_3" im Master-Aufruf "Teiegramm_4" kann der Slave Neu1 erkennen, dass ein weiterer Slave im Zeitfenster 23 gesendet haben muss, da das an dem Bus anliegende Signal von seinem Arbitrierungselement 21 verschieden ist.

Der Slave Neu1 beendet daher seine Teilnahme an dem Arbitrierungsverfahren.

Der Slave Neu4 setzt das Arbitrierungsverfahren fort und sendet sein jeweiliges Arbitrierungselement 21 in den Zeitfenstern 23 "Arbitrierung_5" und "Arbitrierung_6".

Nun ist die Arbitrierungssequenz 20 im Slave Neu4 vollständig abgearbeitet, und der Slave Neu4 hat keinen weiteren höherwertigen Slave detektiert.

Daher ist der Slave Neu4 Gewinner des Arbitrationsverfahrens und hat das Senden der Arbitrationsfrequenz 20 somit erfolgreich vollständig abgeschlossen.

Der Master M2 weiß, dass die Arbitrierungsfrequenz 20 nun vollständig übermittelt wurde und kann daher davon ausgehen, dass nun ein noch nicht angemeldeter Slave Neu1, Neu2, Neu3, Neu4 das Arbitrierungsverfahren gewonnen hat.

Er sendet daher in nicht näher dargestellter Weise eine neue Adresse für diesen Gewinner.

Der Empfänger, in unserem Fall der noch nicht angemeldete Slave Neu4 quittiert dies mit einer Bestätigungsnachricht 24.

Der Master M2 empfängt die Bestätigungsnachricht 24 und trägt daraufhin in der Liste 19 den noch nicht angemeldeten Slave Neu4 mit der Slave-ID 46 als angemeldet in Spalte 17 ein.

Das beschriebene Arbitrierungsverfahren kommt nur dann zu dem durch die Arbitrierungssequenzen 20 der einzelnen noch nicht angemeldeten Slaves Neu1, Neu2, Neu3, Neu4 vorgegebenen Ergebnis der Arbitrierung, wenn sichergestellt ist, dass die Arbitrierungselemente 21, die von den einzelnen Slaves Neu1, Neu2, Neu3, Neu4 im selben Zeitfenster 23 auf den Bus gelegt werden, aus einer einheitlichen Spalte der Tabelle in Fig. 4 stammen.

Um dies zu überwachen, sendet der Master M2 in jedem Master-Aufruf 11 eine Soll-Positionsangabe 25 als "Arbitrierung_1 etc.

Diese Soll-Positionsangabe 25 gibt für jedes Zeitfenster 23 die aktuelle Position in der Arbitrierungsfrequenz 20 vor.

Jeder noch nicht angemeldete Slave Neu1, Neu2, Neu3, Neu4 hat zu seiner Arbitrierungsfrequenz 20 eine zugeordnete Ist-Positionsangabe hinterlegt. In Fig. 4 sind das die Ist-Positionsangaben ID(5), ID(4), ID(3), ID(2), ID(1) und ID(0).

Jeder noch nicht angemeldete Slave Neu1, Neu2, Neu3, Neu4 vergleicht die aktuelle Ist-Positionsangabe 26 des jeweils aktuellen Arbitrierungselement 21 mit der Soll-Positionsangabe 25 aus dem aktuellen Master-Aufruf 11.

Stimmen diese Angaben nicht überein, so muss ein Ablauf- oder Übertragungsfehler vorliegen, und der betreffende noch nicht angemeldete Slave Neu1, Neu2, Neu3, Neu4 beendet seine Teilnahme an dem Arbitrationsverfahren.

Die Ist-Positionsangaben 26 beschreiben somit die zeitliche Abfolge der Arbitrierungselemente 21 der Arbitrierungssequenzen 20 beim Arbitrierungsverfahren.

Bewegt sich der Slave SL2 in Fig. 1 mit der mobilen Einheit 3 aus dem Einzugsbereich des Primärleiters 5, so kann der Slave SL 2 nicht mehr auf Master-Aufrufe 11 des Masters M1 antworten.

Bei jeder ausbleibenden Slave-Antwort 12 des aufgerufenen Slaves SL2 erhöht der Master M1 in der Liste 19 in der Spalte 18 den Zählerstand 27 um 1.

In dem Beispiel nach Fig. 3 hat der Slave SL2 mit der Slave-ID (3) bereits 29 Mal nicht auf einen Master-Aufruf 11 in der nach dem Busprotokoll vorgesehenen Weise geantwortet.

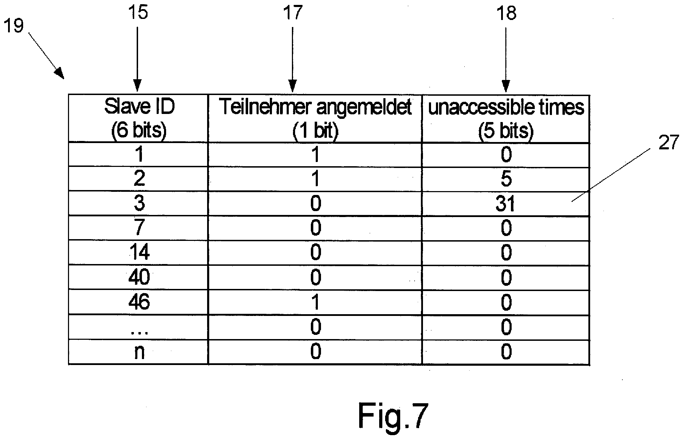

In Fig. 7 ist ersichtlich, dass in der aktualisierten Liste 19 dieser Slave SL2 mit der Slave-ID (3) bereits 31 Mal nicht auf einen Master-Aufruf 11 in der vorbeschriebenen Weise geantwortet hat.

Dies überschreitet einen festgelegten Schwellwert, und der Master M1 trägt den Slave SL2 mit der Slave ID (3) in der Spalte 17 als nicht angemeldet ein.

Bei dem beschriebenen Ausführungsbeispiel handelt es sich bei dem noch nicht angemeldeten Slave Neu4 in den Fig. 4 und 5 um den Slave SL2 der mobilen Einheit 3.

Ist verabredet, dass beispielsweise der Master M1 mit allen Slaves mit einer Slave ID kleiner als 40 kommuniziert, während der Master M2 mit allen Slaves mit einer Slave-ID größer als 39 kommuniziert, so hat mit dem beschriebenen Verfahren eine Übergabe der mobilen Einheit 3 vom Einzugsbereich des Masters M1 in den Einzugsbereich des Masters M2 dadurch stattgefunden, dass der Slave SL2 vor der Übergabe mit der Slave-ID (3) vom Master 1 verwaltet wurde, während der Slave SL2 als Slave-ID (46) nach der Übergabe vom Master M2 verwaltet wird.

Es sei noch erwähnt, dass in der Speicheraufteilung 13 gemäß Fig. 2 eine Spalte 28 zur Aufnahme einer Synchronisationsnummer und einer Spalte 29 zur Aufnahme einer Kanal-Identifikationsnummer vorgesehen und eingerichtet sind. Die Spalten 28, 29 enthalten somit allgemein Kommunikationsparameter zur Durchführung der OFDM-Kommunikation.

In Fig. 5 ist noch ersichtlich, dass die jeweils gesendeten Daten mehrkomponentig sind. Beispielsweise können die Netzdaten "Daten_3" und die Soll-Positionsangabe "Arbitrierung_1" gleichzeitig über verschiedene Frequenzkanäle übermittelt werden.

Schließlich ist in Fig. 5 in der zeitlichen Abfolge 22 ersichtlich, dass zum Ende eines jeden Master-Aufrufes 11, also vor dem jeweils nachfolgenden Zeitfenster 23, ein Sweep-Signal 30 gesendet wird, mit welchem eine Funktionsprüfung in Form einer eine Kanalprüfung der Übertragungseigenschaften der verwendeten Kommunikationskanäle durchgeführt wird. Hierzu wird in dem Sweep-Signal 30 auf den verwendeten oder allen verfügbaren Frequenzkanälen ein Prüfsignal gesendet, und die teilnehmenden Slaves, insbesondere die angemeldeten Slaves SL1, SL2, SL3, empfangen das Sweep-Signal 30 und prüfen die Kanalübertragungseigenschaften, um gegebenenfalls Verstärkungsfaktoren anzupassen oder Frequenzkanäle zu wechseln. Es hat sich als vorteilhaft erwiesen, das Sweep-Signal vor den Zeitfenstern 23 und nach den Nutzdaten des Master-Aufrufs 11 zu senden, um die Kanalprüfung während der Datenverarbeitung des Master-Aufrufes 11 in den Slaves SL1, SL2, SL3 zu ermöglichen.

Bei dem Anmeldeverfahren für einen noch nicht angemeldeten Slave Neu1, Neu2, Neu3, Neu4 in einem Bussystem 9, 10 mit wenigstens einem Master M1, M2 und bereits angemeldeten Slaves SL1, SL2, SL3 wird vorgeschlagen, einen Datenaustausch im Normalbetrieb in der zeitlichen Abfolge 22 von Master-Aufrufen 11 und Slave-Antworten 12 innerhalb von Zeitfenstern 23 zu unterbrechen, wobei die noch nicht angemeldeten Slaves Neu1, Neu2, Neu3, Neu4 in den Zeitfenstern 23 jeweils ein Arbitrierungselement 21 der individuell zugeordneten Arbitrierungssequenz 20 senden, und denjenigen noch nicht angemeldeten Slave Neu1, Neu2, Neu3, Neu4 in die Liste 19 der bereits angemeldeten Slaves SL1, SL2, SL3 einzutragen, welcher das Arbitrierungsverfahren gewonnen hat.

### Bezugszeichenliste

- 1: industrielle Anlage
- 2,3,4: mobile Einheiten
- 5,6: Primärleiter
- 7,8: stationäre Einheit
- 9,10: Bussystem
- 11: Master-Aufruf
- 12: Slave-Antwort
- 13: Speicheraufteilung
- 14,15,16,17,18: Spalte
- 19: Liste
- 20: Arbitrierungssequenz
- 21: Arbitrierungselement
- 22: zeitliche Abfolge
- 23: Zeitfenster
- 24: Bestätigungsnachricht
- 25: Soll-Positionsangabe
- 26: Ist-Positionsangabe
- 27: Zählerstand
- 28,29: Spalte
- M1, M2: Master
- SL1, SL2, SL3: angemeldeter Slave
- Neu1, Neu2: noch nicht angemeldeter Slave
- Neu3, Neu4: noch nicht angemeldeter Slave

## Patentansprüche

1. Anmeldeverfahren für einen noch nicht angemeldeten Slave (Neu1, Neu2, Neu3, Neu4) in einem einen Master (M1, M2) umfassenden Bussystem (9, 10),
wobei in dem Master (M1, M2) eine Liste (19) von zur Buskommunikation bereits angemeldeten Slaves (SL1, SL2, SL3) vorgehalten wird,
der Master (M1, M2) an die bereits angemeldeten Slaves (SL1, SL2, SL3) über einen Bus des Bussystems (9, 10) Master-Aufrufe (11) sendet
und jeder bereits angemeldete Slave (SL1, SL2, SL3) auf einen an ihn gerichteten Master-Aufruf (11) über den Bus eine Slave-Antwort (12) sendet,
wobei
in der zeitlichen Abfolge (22) der Master-Aufrufe (11) und der Slave-Antworten (12) vom Master (M1, M2) und den angemeldeten Slaves (SL1, SL2, SL3) Zeitfenster freigehalten werden,
**dadurch gekennzeichnet, dass**
der noch nicht angemeldete Slave (Neu1, Neu2, Neu3, Neu4) über den Bus in den Zeitfenstern (23) jeweils ein Arbitrierungselement (21) einer Arbitrierungssequenz (20) sendet,
so dass die Arbitrierungssequenz (20) auf zwei oder mehr Arbitrierungselemente (21) aufgeteilt wird und diese Arbitrierungselemente (21) einzeln in den zeitlich zueinander beabstandeten Zeitfenstern gesendet werden, und
und der Master (M1, M2) den noch nicht angemeldeten Slave (Neu1, Neu2, Neu3, Neu4) in die Liste (19) als angemeldeten Slave (SL1, SL2, SL3) einträgt, wenn der noch nicht angemeldete Slave (Neu1, Neu2, Neu3, Neu4) seine Arbitrierungssequenz (20) erfolgreich vollständig gesendet hat.

2. Anmeldeverfahren nach Anspruch 1, **dadurch gekennzeichnet, dass** die Zeitfenster (23) zwischen jedem Master-Aufruf (11) und der jeweils nachfolgenden Slave-Antwort (12) freigehalten werden.

3. Anmeldeverfahren nach einem der Ansprüche 1 oder 2, **dadurch gekennzeichnet, dass** der Master (M1, M2) für jedes Zeitfenster (23) ein in dem Zeitfenster (23) an dem Bus anliegendes Signal wiederholt.

4. Anmeldeverfahren nach einem der Ansprüche 1 bis 3, **dadurch gekennzeichnet, dass** der noch nicht angemeldete Slave (Neu1, Neu2, Neu3, Neu4) das Senden der Arbitrierungssequenz (20) beendet, wenn in einem Zeitfenster (23), in welchem dieser noch nicht angemeldete Slave (Neu1, Neu2, Neu3, Neu4) ein Arbitrierungselement (21) sendet, ein weiterer noch nicht angemeldeter Slave (Neu1, Neu2, Neu3, Neu4) ein höherwertigeres Arbitrierungselement sendet oder gesendet hat.

5. Anmeldeverfahren nach einem der Ansprüche 1 bis 4, **dadurch gekennzeichnet, dass** der noch nicht angemeldete Slave (Neu1, Neu2, Neu3, Neu4) für jedes Zeitfenster (23), in welchem dieser noch nicht angemeldete Slave (Neu1, Neu2, Neu3, Neu4) ein Arbitrierungselement sendet, ein in dem Zeitfenster (23) an dem Bus anliegendes Signal mit diesem Arbitrierungselement (21) vergleicht.

6. Anmeldeverfahren nach einem der Ansprüche 1 bis 5, **dadurch gekennzeichnet, dass** der noch nicht angemeldete Slave (Neu1, Neu2, Neu3, Neu4) das Senden der Arbitrierungssequenz (20) beendet, wenn in einem Zeitfenster (23), in welchem dieser noch nicht angemeldete Slave (Neu1, Neu2, Neu3, Neu4) ein Arbitrierungselement (21) sendet, an dem Bus ein Signal anliegt, welches höherwertiger als das eigene gesendete Arbitrierungselement (21) ist.

7. Anmeldeverfahren nach einem der Ansprüche 1 bis 6, **dadurch gekennzeichnet, dass** der Master (M1, M2) dem noch nicht angemeldeten Slave (Neu1, Neu2, Neu3, Neu4), der seine Arbitrierungssequenz (20) erfolgreich vollständig gesendet hat, über den Bus eine Adresse zuteilt, und/oder dass der noch nicht angemeldete Slave (Neu1, Neu2, Neu3, Neu4), der seine Arbitrierungssequenz (20) erfolgreich vollständig gesendet hat und/oder dem vom Master (M1, M2) eine Adresse zugeteilt wurde, über den Bus eine Bestätigungsnachricht (24) sendet.

8. Anmeldeverfahren nach einem der Ansprüche 1 bis 7, **dadurch gekennzeichnet, dass** der Master (M1, M2) den noch nicht angemeldeten Slave (Neu1, Neu2, Neu3, Neu4) erst in die Liste (19) aufnimmt, wenn er die oder eine Bestätigungsnachricht (24) des noch nicht angemeldeten Slaves (Neu1, Neu2, Neu3, Neu4) empfangen hat.

9. Anmeldeverfahren nach einem der Ansprüche 1 bis 8, **dadurch gekennzeichnet, dass** den Arbitrierungselementen (21) in der Arbitrierungssequenz (20) jeweils Ist-Positionsangaben (26) zugeordnet sind, durch welche die zeitliche Reihenfolge der Arbitrierungselemente (21) in der Arbitrierungssequenz (20) beschrieben wird.

10. Anmeldeverfahren nach einem der Ansprüche 1 bis 9, **dadurch gekennzeichnet, dass** den Zeitfenstern (23) zumindest während der Zeitdauer für das Senden einer vollständigen Arbitrierungssequenz (20) jeweils eine Soll-Positionsangabe (25) zugeordnet ist und/oder dass der noch nicht angemeldete Slave (Neu1, Neu2, Neu3, Neu4) das Senden der Arbitrierungssequenz (20) beendet, wenn die Soll-Positionsangabe (25) des aktuellen Zeitfensters (23) von der Ist-Positionsangabe (26) des von diesem noch nicht angemeldeten Slave (Neu1, Neu2, Neu3, Neu4) aktuell gesendeten oder zu sendenden Arbitrierungselements (21) abweicht.

11. Anmeldeverfahren nach einem der Ansprüche 1 bis 10, **dadurch gekennzeichnet, dass** die Soll-Positionsangabe (25) für jedes Zeitfenster (23) vor und/oder nach dem Zeitfenster (23) vom Master (M1, M2) über den Bus gesendet wird.

12. Anmeldeverfahren nach einem der Ansprüche 1 bis 11, **dadurch gekennzeichnet, dass** ein angemeldeter Slave (SL1, SL2, SL3) aus der Liste (19) gelöscht wird, wenn er eine vorbestimmte Anzahl von Malen auf einen an ihn gerichteten Master-Aufruf (11) keine oder eine fehlerhafte Slave-Antwort (12) gesendet hat.

13. Anmeldeverfahren nach einem der Ansprüche 1 bis 12, **dadurch gekennzeichnet, dass** die angemeldeten Slaves (SL1, SL2, SL3) zyklisch vom Master (M1, M2) aufgerufen werden und/oder dass der Master (M1, M2) und die angemeldeten und/oder noch nicht angemeldeten Slaves (SL1, SL2, SL3, Neu1, Neu2, Neu3, Neu4) über den Bus FDM- oder OFDM-kodierte Signale senden.

14. Anmeldeverfahren nach einem der Ansprüche 1 bis 13, **dadurch gekennzeichnet, dass** nach Abschluss eines oder des Master-Aufrufs (11) und/oder vor dem Zeitfenster (23) eine Funktionsprüfung von zur Buskommunikation genutzten Frequenzkanälen durchgeführt wird und/oder dass der Master (M1, M2) und/oder wenigstens ein Slave (SL1, SL2, SL3, Neu1, Neu2, Neu3, Neu4) einen zum Senden oder Empfangen verwendeten Verstärkungsfaktor anpasst und/oder auf einen anderen Frequenzkanal wechselt, wenn die oder eine Funktionsprüfung unzureichende Übertragungseigenschaften in dem Frequenzkanal ergab.

15. Buskommunikationseinrichtung mit einem Master (M1, M2) und wenigstens einem Slave (SL 1, SL 2, SL3, Neu1, Neu2, Neu3, Neu4), **dadurch gekennzeichnet, dass** Mittel zur Ausführung eines Anmeldeverfahrens nach einem der vorangegangenen Ansprüche ausgebildet und eingerichtet sind.

## Claims

1. Registration method for a not yet registered slave (New1, New2, New3, New4) in a bus system (9, 10) comprising a master (M1, M2),
wherein a list (19) of slaves (SL1, SL2, SL3) already registered for the bus communication is held ready in the master (M1, M2),
the master (M1, M2) sends master calls (11) to the already registered slaves (SL1, SL2, SL3) via a bus of the bus system (9, 10)
and each already registered slave (SL1, SL2, SL3) sends via the bus a slave response (12) to a master call (11) directed to it,
wherein
in the chronological order (22) of the master calls (11) and the slave responses (12) time windows are kept free by the master (M1, M2) and the registered slaves (SL1, SL2, SL3), **characterised in that**
the not yet registered slave (New1, New2, New3, New4) sends via the bus in the time windows (23) in each case an arbitration element (21) of an arbitration sequence (20),
so that the arbitration sequence (20) is divided into two or more arbitration elements (21) and these arbitration elements (21) are sent individually in the time windows spaced in time with respect to one another,
and the master (M1, M2) enters the not yet registered slave (New1, New2, New3, New4) in the list (19) as registered slave (SL1, SL2, SL3) if the not yet registered slave (New1, New2, New3, New4) has successfully sent its arbitration sequence (20) completely.

2. Registration method according to claim 1, **characterised in that** the time windows (23) between each master call (11) and each subsequent slave response (12) are kept free.

3. Registration method according to one of claims 1 or 2, **characterised in that** the master (M1, M2) for each time window (23) repeats a signal applied to the bus in the time window (23).

4. Registration method according to one of claims 1 to 3, **characterised in that** the not yet registered slave (New1, New2, New3, New4) stops sending the arbitration sequence (20) if, in a time window (23) in which this not yet registered slave (New1, New2, New3, New4) sends an arbitration element (21), a further not yet registered slave (New1, New2, New3, New4) sends or has sent a higher-value arbitration element.

5. Registration method according to one of claims 1 to 4, **characterised in that** the not yet registered slave (New1, New2, New3, New4), for each time window (23) in which this not yet registered slave (New1, New2, New3, New4) sends an arbitration element, compares a signal applied to the bus in the time window (23) with this arbitration element (21).

6. Registration method according to one of claims 1 to 5, **characterised in that** the not yet registered slave (New1, New2, New3, New4) stops sending the arbitration sequence (20) if, in a time window (23) in which this not yet registered slave (New1, New2, New3, New4) sends an arbitration element (21), a signal is applied to the bus which is of higher value than its own sent arbitration element (21).

7. Registration method according to one of claims 1 to 6, **characterised in that** the master (M1, M2) allocates via the bus an address to the not yet registered slave (New1, New2, New3, New4) which has successfully sent its arbitration sequence (20) completely, and/or **in that** the not yet registered slave (New1, New2, New3, New4) which has successfully sent its arbitration sequence (20) completely and/or has been allocated an address by the master (M1, M2) sends via the bus an acknowledgment message (24).

8. Registration method according to one of claims 1 to 7, **characterised in that** the master (M1, M2) only includes the not yet registered slave (New1, New2, New3, New4) in the list (19) if it has received the or a confirmation message (24) of the not yet registered slave (New1, New2, New3, New4).

9. Registration method according to one of claims 1 to 8, **characterised in that** arbitration elements (21) in the arbitration sequence (20) are in each case assigned instantaneous position information (26), by which the chronological order of the arbitration elements (21) in the arbitration sequence (20) is described.

10. Registration method according to one of claims 1 to 9, **characterised in that** the time windows (23), at least during the period of time for sending a complete arbitration sequence (20), are in each case assigned target information (25) and/or in that the not yet registered slave (New1, New2, New3, New4) stops sending the arbitration sequence (20) if the target position information (25) of the current time window (23) deviates from the instantaneous position information (26) of the arbitration element (21) currently being sent or to be sent by this not yet registered slave (New1, New2, New3, New4).

11. Registration method according to one of claims 1 to 10, **characterised in that** the target position information (25) for each time window (23) before and/or after the time window (23) is sent by the master (M1, M2) via the bus.

12. Registration method according to one of claims 1 to 11, **characterised in that** a registered slave (SL1, SL2, SL3) is deleted from the list (19) if it has sent no or an incorrect slave response (12) a predetermined number of times to a master call (11) directed to it.

13. Registration method according to one of claims 1 to 12, **characterised in that** the registered slaves (SL1, SL2, SL3) are called cyclically by the master (M1, M2) and/or **in that** the master (M1, M2) and the registered and/or not yet registered slaves (SL1, SL2, SL3, New1, New2, New3, New4) send via the bus FDM or OFDM encoded signals.

14. Registration method according to one of claims 1 to 13, **characterised in that** after completion of a or the master call (11) and/or before the time window (23) a functional test of frequency channels used for the bus communication is performed and/or **in that** the master (M1, M2) and/or at least one slave (SL1, SL2, SL3, New1, New2, New3, New4) adjusts an amplification factor used for sending or receiving and/or changes it to another frequency channel if the or a functional test has shown insufficient transmission characteristics in the frequency channel.

15. Bus communication device with a master (M1, M2) and at least one slave (SL1, SL2, SL3, New1, New2, New3, New4), **characterised in that** means are configured and arranged for carrying out a registration method according to one of the preceding claims.

## Revendications

1. Procédé d'enregistrement pour un esclave non encore enregistré (Neu1, Neu2, Neu3, Neu4) dans un système de bus (9, 10) comprenant un maître (M1, M2), sachant qu'une liste (19) d'esclaves déjà enregistrés (SL1, SL2, SL3) pour la communication par bus est gérée dans le maître (M1, M2),
que le maître (M1, M2) envoie aux esclaves déjà enregistrés (SL1, SL2, SL3) des appels de maître (11) par l'intermédiaire d'un bus du système de bus (9, 10),
et que chaque esclave déjà enregistré (SL1, SL2, SL3) envoie par l'intermédiaire du bus une réponse d'esclave (12) à un appel de maître (11) qui lui est adressé,
sachant que des fenêtres de temps sont réservées pendant la succession dans le temps (22) des appels de maître (11) du maître (M1, M2) et des réponses d'esclaves (12) des esclaves enregistrés (SL1, SL2, SL3),
**caractérisé en ce que**
l'esclave non encore enregistré (Neu1, Neu2, Neu3, Neu4) envoie respectivement pendant les fenêtres de temps (23), par l'intermédiaire du bus, un élément d'arbitrage (21) d'une séquence d'arbitrage (20),
de sorte que la séquence d'arbitrage (20) est répartie sur deux éléments d'arbitrage (21) ou davantage et que ces éléments d'arbitrage (21) sont envoyés individuellement pendant les fenêtres de temps mutuellement distantes dans le temps,
et le maître (M1, M2) inscrit l'esclave non encore enregistré (Neu1, Neu2, Neu3, Neu4) dans la liste (19) comme esclave enregistré (SL1, SL2, SL3) si l'esclave non encore enregistré (Neu1, Neu2, Neu3, Neu4) a envoyé complètement avec succès sa séquence d'arbitrage (20).

2. Procédé d'enregistrement selon la revendication 1, **caractérisé en ce que** la fenêtre de temps (23) est réservée entre chaque appel de maître (11) et la réponse d'esclave (12) respectivement consécutive.

3. Procédé d'enregistrement selon l'une des revendications 1 ou 2, **caractérisé en ce que** le maître (M1, M2), pour chaque fenêtre de temps (23), répète un signal appliqué au bus pendant la fenêtre de temps (23).

4. Procédé d'enregistrement selon l'une des revendications 1 à 3, **caractérisé en ce que** l'esclave non encore enregistré (Neu1, Neu2, Neu3, Neu4) met un terme à l'envoi de la séquence d'arbitrage (20) si, pendant une fenêtre de temps (23) pendant laquelle cet esclave non encore enregistré (Neu1, Neu2, Neu3, Neu4) envoie un élément d'arbitrage (21), un autre esclave non encore enregistré (Neu1, Neu2, Neu3, Neu4) envoie ou a envoyé un élément d'arbitrage de plus haute valeur.

5. Procédé d'enregistrement selon l'une des revendications 1 à 4, **caractérisé en ce que** l'esclave non encore enregistré (Neu1, Neu2, Neu3, Neu4), pour chaque fenêtre de temps (23) pendant laquelle cet esclave non encore enregistré (Neu1, Neu2, Neu3, Neu4) envoie un élément d'arbitrage, compare à cet élément d'arbitrage (21) un signal appliqué au bus pendant la fenêtre de temps (23).

6. Procédé d'enregistrement selon l'une des revendications 1 à 5, **caractérisé en ce que** l'esclave non encore enregistré (Neu1, Neu2, Neu3, Neu4) met un terme à l'envoi de la séquence d'arbitrage (20) si, pendant une fenêtre de temps (23) pendant laquelle cet esclave non encore enregistré (Neu1, Neu2, Neu3, Neu4) envoie un élément d'arbitrage (21), un signal qui est de plus haute valeur que le propre élément d'arbitrage émis (21) est appliqué au bus.

7. Procédé d'enregistrement selon l'une des revendications 1 à 6, **caractérisé en ce que** le maître (M1, M2) attribue par l'intermédiaire du bus une adresse à l'esclave non encore enregistré (Neu1, Neu2, Neu3, Neu4) qui a envoyé complètement avec succès sa séquence d'arbitrage (20), et/ou **en ce que** l'esclave non encore enregistré (Neu1, Neu2, Neu3, Neu4) qui a envoyé complètement avec succès sa séquence d'arbitrage (20), et/ou auquel une adresse a été attribuée par le maître (M1, M2), envoie par l'intermédiaire du bus un message de confirmation (24).

8. Procédé d'enregistrement selon l'une des revendications 1 à 7, **caractérisé en ce que** le maître (M1, M2) n'inscrit l'esclave non encore enregistré (Neu1, Neu2, Neu3, Neu4) dans la liste (19) que s'il a reçu le ou un message de confirmation (24) de l'esclave non encore enregistré (Neu1, Neu2, Neu3, Neu4).

9. Procédé d'enregistrement selon l'une des revendications 1 à 8, **caractérisé en ce que** des indications (26) de position effective sont respectivement associées aux éléments d'arbitrage (21) dans la séquence d'arbitrage (20), lesquelles décrivent l'ordre de succession dans le temps des éléments d'arbitrage (21) dans la séquence d'arbitrage (20).

10. Procédé d'enregistrement selon l'une des revendications 1 à 9, **caractérisé en ce qu'**une indication (25) de position de consigne est respectivement associée aux fenêtres de temps (23) au moins pendant la durée d'envoi d'une séquence d'arbitrage complète (20), et/ou **en ce que** l'esclave non encore enregistré (Neu1, Neu2, Neu3, Neu4) met un terme à l'envoi de la séquence d'arbitrage (20) si l'indication (25) de position de consigne de la fenêtre de temps actuelle (23) diffère de l'indication (26) de position effective de l'élément d'arbitrage (21) actuellement émis ou à émettre par cet esclave non encore enregistré (Neu1, Neu2, Neu3, Neu4).

11. Procédé d'enregistrement selon l'une des revendications 1 à 10, **caractérisé en ce que** l'indication (25) de position de consigne pour chaque fenêtre de temps (23) est envoyée par le maître (M1, M2) par l'intermédiaire du bus avant et/ou après la fenêtre de temps (23).

12. Procédé d'enregistrement selon l'une des revendications 1 à 11, **caractérisé en ce qu'**un esclave enregistré (SL1, SL2, SL3) est effacé de la liste (19) si, un nombre prédéterminé de fois, il n'a pas envoyé de réponse d'esclave (12) ou il a envoyé une réponse d'esclave (12) défectueuse à un appel de maître (11) qui lui est adressé.

13. Procédé d'enregistrement selon l'une des revendications 1 à 12, **caractérisé en ce que** les esclaves enregistrés (SL1, SL2, SL3) sont cycliquement appelés par le maître (M1, M2), et/ou **en ce que** le maître (M1, M2) et les esclaves enregistrés et/ou non encore enregistrés (SL1, SL2, SL3, Neu1, Neu2, Neu3, Neu4) envoient par l'intermédiaire du bus des messages codés FDM ou OFDM.

14. Procédé d'enregistrement selon l'une des revendications 1 à 13, **caractérisé en ce que**, à la suite de l'achèvement d'un ou de l'appel de maître (11) et/ou avant la fenêtre de temps (23), un contrôle du fonctionnement des canaux de fréquences utilisés pour la communication par bus est effectué, et/ou **en ce que** le maître (M1, M2) et/ou au moins un esclave (SL1, SL2, SL3, Neu1, Neu2, Neu3, Neu4) ajustent un facteur d'amplification utilisé pour l'envoi ou la réception, et/ou passent sur un autre canal de fréquences, si le ou un contrôle du fonctionnement a indiqué des propriétés de transmission insuffisantes dans le canal de fréquences.

15. Dispositif de communication par bus avec un maître (M1, M2) et au moins un esclave (SL1, SL2, SL3, Neu1, Neu2, Neu3, Neu4), **caractérisé en ce que** des moyens sont conçus et configurés pour exécuter un procédé d'enregistrement selon l'une des revendications précédentes.
